**Europäisches Patentamt**

**European Patent Office**

**Office européen des brevets**

(11) Publication number : **0 579 415 A1**

## (12) EUROPEAN PATENT APPLICATION

(21) Application number : **93305128.6**

(22) Date of filing : **30.06.93**

(51) Int. Cl.$^5$ : **F01N 3/20, F01N 3/28**

(30) Priority : **11.07.92 GB 9214775**

(43) Date of publication of application :
**19.01.94 Bulletin 94/03**

(84) Designated Contracting States :
**AT BE CH DE DK ES FR GB GR IE IT LI NL PT SE**

(71) Applicant : **JOHNSON MATTHEY PUBLIC LIMITED COMPANY**
**78 Hatton Garden**
**London, WC1N 8JP (GB)**

(72) Inventor : **Bennett, Christopher John**
**14 Odiham Avenue**
**Caversham Park Village, Reading RG4 0PU (GB)**
Inventor : **Waldram, Simon Patrick**
**2 Cascade Avenue**
**Muswell Hill, London N10 3PU (GB)**

(74) Representative : **Brewer, Leonard Stuart et al**
**Patents Department Johnson Matthey**
**Technology Centre Blounts Court Sonning Common**
**Reading Berkshire RG4 9NH (GB)**

(54) **Upstream heater for a catalyst.**

(57)    Apparatus for use in an engine exhaust system contains

a catalyst (A) for the treatment of the exhaust gas in order to combat air pollution, and

a non-catalytic heater (B,C) up-stream of the catalyst (A), to reduce the time it takes the catalyst (A) to reach its effective reaction temperature, the heater (B,C) having at least 15 heated channels per square cm, as measured at right angles to the gas flow through them, the heated channels being less than 1.0 cm in length, so that in operation the gas passes through the channels, and is thereby heated before it reaches the catalyst (A), the heater (B,C) being such that the heated gas leaving the channels has at least to some extent turbulent flow.

Figure 2

This invention relates to apparatus for use in an engine exhaust system in order to combat air pollution from the exhaust gas, and to a method of combating air pollution using the apparatus.

To combat air pollution caused by the exhaust gas of an engine, it is well known to treat the gas, before emission into the air, with a catalyst for decreasing the amount of gaseous pollutants in the exhaust gas. In particular, catalytic converters are employed to decrease gaseous pollutants (particularly hydrocarbons, carbon monoxide and nitrogen oxides) in the exhaust gas of internal combustion vehicles. The catalytic converters, however, unless steps are taken to alleviate the problem, take several minutes to heat up to their effective operating temperature from a cold start, and in that time a significant amount of pollutant is emitted into the air. The cold start phase of the standard United States Federal Test Procedure produces the major portion of the total emissions of the whole test (see Society of Automotive Engineers, Inc, paper 890799).

Electrically heating the catalytic converter has been proposed in order to reduce the time it takes to achieve light-off (see for instance the 1989 Society of Automotive Engineers paper referred to above). In such arrangements, a substrate serves simultaneously as a resistive heating device and the support for the catalytic coating.

It has also been proposed to employ a heater up-stream of the catalytic converter. For instance, the 1989 Society of Automotive Engineers paper referred to above discloses a resistively heated catalytic converter up-stream of a main catalytic converter.

United States patent 3723070, whose patent application was filed in 1970, discloses in "apparatus which is quickly effective upon starting an internal combustion engine for oxidising unburned exhaust gas ingredients, the combination which comprises an internal combustion engine having an exhaust conduit through which said exhaust gases are caused to flow as a stream, electrically conductive resistance means having a catalytic surface having a predetermined mass arranged in said conduit, with said resistance means having electric heating means for increasing the temperature of the stream for oxidizing unburned ingredients exothermically, and said resistance means having portions that are closely spaced with respect to each other and with respect to said conduit and extending across substantially the entire stream with void spaces therebetween to comprise means for allowing a high degree of contact between said resistance means and exhaust gases passing therethrough and for catalytically sufficiently heating exhaust gases passing therethrough for drastically increasing the temperature of the stream for oxidising unburned ingredients catalytically, and a bulk catalyst located in said stream, downstream of said resistance means catalyst and in a position to receive sufficient heat that is generated by said hot resistance means catalyst, the mass of said bulk catalyst being many times the mass of said resistance means".

European patent specification 465184A concerns a resistance adjusting type heater comprising a honeycomb structure having a large number of passages, said honeycomb structure being provided with at least two electrodes through which a current is supplied thereto, said honeycomb structure having a resistance structure adjusted to attain a current density of 5A/mm$^2$ or above between said electrodes.

US patent 5051241 concerns a catalytic reaction system for the chemical conversion of carbon-containing compounds comprising a multiplicity of catalytic elements and having at least one microlith catalytic element having flow channels with flow paths less than about one millimetre and having a ratio of channel length to channel diameter of less than about two to one.

The present invention concerns an improved apparatus having a heater up-stream of the catalyst.

Accordingly, the invention provides apparatus for use in an engine exhaust system, which apparatus contains

(A) a catalyst for the treatment of the exhaust gas in order to combat air pollution, and

(B) a non-catalytic heater up-stream of the catalyst, to reduce the time it takes the catalyst to reach its effective reaction temperature, the heater having at least 15 heated channels per square cm, as measured at right angles to the gas flow through them, the heated channels being less than 1.0cm in length, so that in operation the gas passes through the channels, and is thereby heated, before it reaches the catalyst, the heater being such that the heated gas leaving the channels has at least to some extent turbulent flow.

The invention provides also a method of combating air pollution from an engine exhaust system, which method comprises passing the exhaust gas through this apparatus.

The present apparatus is advantageous because of its effective use of the energy required to power the heater and hence reduce the time it takes the catalyst to reach its effective reaction temperature. The present combination of at least 15 heated channels per square cm and the heated gas leaving the channels with at least to some extent turbulent flow results in extremely good transfer of heat from the heater to the gas. This contrasts with the recent art, exemplified by the Society of Automotive Engineers paper 890799 discussed above, in which the heated channels are of such length that by the time the gas is heated it has full laminar flow. It can be seen that the present concentration of the heated channels per square cm contrasts with the markedly lower concentrations revealed in US patent specification 3723070 mentioned above. The present, higher, concentration permits greater contact between the gas and the surface of the heated channels. Instead of the high concentration being employed in an arrangement in which the gas leaving the heater has full laminar flow, however, in the present invention the present high concentration of heated channels is employed in an arrangement which avoids full laminar flow. This is done by making the channels short, preferably between 0.03 and 1cm in length. The present flow, which is at least to some extent turbulent, results in a thinner or no boundary layer adjacent to the surface of the heated channels and hence the gas absorbing its heat better. In contrast, in full laminar flow, the gas flow is parallel to the channels, so that contact is less, particularly for the part of the flow through the central part of a channel rather than through its periphery, which is adjacent the heated channel surface. In addition, the present heater is non-catalytic, in contrast to the disclosures of catalytic heaters in prior art specified above. The present apparatus consequently avoids the necessity of using in the heater precious metals like platinum or rhodium or other rare and expensive materials to be employed as catalyst and avoids the necessity of any additional stage of coating with materials to be employed as catalyst. Metals or other materials which are catalytic in other circumstances (including platinum and/or rhodium) can be employed in the present heater, but in the present heater they must be non-catalytic. Further, the absence of a catalytic coating reduces the thermal mass of the heater, so that it transfers heat to the gas more quickly. It has been found surprisingly that avoiding making the present heater catalytic does not impair the time it takes the present catalyst (A) down-stream of the heater to heat up or impair the catalytic activity of the apparatus. The present apparatus also has good durability.

The exhaust system in which the present apparatus is used is usually that of an internal or external combustion engine. The external combustion engine can be a gas turbine. The internal combustion engine can be a spark ignition or diesel engine. The engine is preferably a petrol (gasoline) or methanol, especially a petrol, engine. The present apparatus is generally for use in a vehicle.

The catalyst (A) in the apparatus can be a known catalyst. It comprises (ie consists of or includes) preferably at least one of platinum and palladium, optionally together with rhodium. In a preferred embodiment, the catalyst comprises platinum and rhodium. The catalyst usually oxidises hydrocarbons and carbon monoxide to carbon dioxide, and reduces nitrogen oxides to nitrogen.

The catalyst can be in known form, especially supported on a honeycomb monolith. Preferably the catalyst is dispersed on a high surface area carrier such as alumina. The carrier in turn is preferably on a support for example a pellet bed but especially a monolith. The present monolith is preferably a honeycomb monolith, and is preferably ceramic. The monolith is usually of length 5 to 20cm; usually its area of cross-section at right angles to the flow of gas through it is 8-800 square cm. The monolith usually has 15.5 to 93 channels per square cm of cross-section. Thus, a conventional catalytic converter can be employed.

So as to use the maximum amount of heat from the heated gas in order to heat up the catalyst, the heater is preferably situated immediately in front of the catalyst. The distance between the end of at least some, preferably at least 25%, especially at least 50%, for example all, of the heated channels and the beginning of the catalyst is preferably 0-5cm, eg 0.2-1cm.

The heater has at least 15 heated channels per square cm, as measured at right angles to the gas flow through them. Preferably the heater has 30-5000, for example 50-1000, of the heated channels per square cm.

Since there is a high concentration of heated channels, the cross-sectional area within the channels is small. The channels preferably have a hydraulic diameter of less than 0.3cm, for example less than O.lcm, for instance less than 0.05cm.

It is surprising in view of much of the prior art that the present heater can be so short. Indeed, the heated channels must be short enough so that the heated gas leaving them has at least to some extent turbulent flow. The channels are less than 1.0cm in length. Usually they are at least 0.001cm, preferably at least 0.03cm, in length. In a particular embodiment, they are between 0.001cm and 1.0cm in length. In a preferred embodiment, they are 0.001-0.9cm, for example 0.005-0.2cm, in length.

The heater can be in a range of sizes, depending for instance on the catalyst and its configuration. The area of cross-section occupied by the channels at right angles to the flow of gas through them is usually 1-6500, for example 2-2000, preferably 8-800, square cm. The area is preferably such that the dimension in any one direction does not differ from that in any other direction by more than 100%. The area is preferably circular (so that the dimension in all directions is the same), elliptical, the so-called (in the case of catalytic converters) race-track shape, square or rectangular.

The present heater is preferably wide and short compared to most prior art heaters. The area of the cross-section occupied by the channels at right angles to the flow of gas through them is preferably 1-260,000,000, for example 200-32,000,000, times the square of the length of the channels.

The heated gas leaving the channels has at least to some extent turbulent flow. Whether a gas has laminar flow can be determined by Langhaar's Analysis (Langhaar HL, Transactions of ASME, Journal of Applied Mechanics, June 1942, 64, page A55). The pressure drop ($\Delta P$) of a gas across a device is proportional to the velocity (V) of the gas entering it in the case of full laminar flow and to the square of this velocity in the case of full turbulent flow. In the present apparatus, the greater the extent of turbulent flow of the gas leaving the channels the better. The present heater is preferably such that it satisfies the relationship

$$\Delta P \: \alpha \: V^n$$

in which $\Delta P$ is the pressure drop across the channels, V is the velocity of the gas entering them and n is from 1.2 to 2, preferably from 1.4 to 2, especially from 1.6 to 2.

The heated channels are preferably resistance heated by electrical power, and hence are preferably of metal. The heater can be for instance of 1-6kW, for example 1-4kW, of electrical power. In a particular embodiment, the heater is of up to 3kW of electrical power, for instance accounted for by up to 1.5kW for each of 2 heater elements, such as heated gauzes, making up the heater. In another embodiment, the heater is of less than 1.5kW. The resistance of the present heater can be for instance 0.005-1 ohm.

The heated channels are conveniently uniform within any heater element making up the heater and conveniently within the heater as a whole. They are conveniently the same length, conveniently the same in cross-section (for example round or square) at right angles to the flow of gas through them, and conveniently of uniform distribution across the area of the cross-section occupied by the channels at right angles to the flow of gas through them. Preferably, the channels are parallel to each other. Preferably, the general route of flow in the heater is straight through (in contrast to that shown in Figure 9 of US specification 3723070 discussed above).

The heated channels are of high surface area, by reason of their large number. They are advantageously of low thermal mass, so that they heat up quickly; for the same reason, they are preferably uncoated.

The heated channels are preferably provided by one or more heated gauzes, one or more heated areas of expanded mesh, or one or more heated coils, especially by one or more heated gauzes. When a plurality of heating elements is employed, they can be side-by-side across the flow of gas and/or in front of one another in the gas flow. They can be angled with respect to each other to enhance turbulence. For the same reason, when one element is in front of another, they can be positioned so that the heated channels of one are off-set with respect to the heated channels of the other. In a preferred embodiment, there are 1-4, especially 1 or 2, heating elements, preferably in front of one another in the gas flow.

The heated channels preferably have a mass of 0.002-4g per square cm of cross section measured at right angles to the flow of gas through them.

The heated channels are non-catalytic. The heater merely imparts heat to the gas in the engine exhaust system in which it is situated. This can be tested by an energy balance test such as is described hereafter in Example 2. Heaters are indicated as being non-catalytic by their failure to oxidise propene under typical car exhaust conditions where gas and heater are at 400°C at a gas incident velocity parallel to the heated channels of 1 metre per second calculated at standard temperature and pressure.

Light-off of a catalyst can be defined as the achievement from startup at ambient temperature of a 50% conversion rate by the catalyst. The present heater is preferably such that it reduces the time taken to light-off of CO by catalyst (A) by at least one half.

The present apparatus can be contained in a canister for mounting in the exhaust system. Alternatively, the heater and catalyst can be mounted separately in the exhaust system. The catalyst can be mounted in its usual position in the exhaust system, and can be mounted in known way.

The apparatus preferably incorporates means to turn off the supply of energy, preferably a supply of electricity, which heats the channels, once the catalyst has reached its desired temperature. This avoids supplying energy unnecessarily, which would be a waste of energy. The temperature of the catalyst, for example at light-off, can be sensed, for example by at least one thermocouple.

The apparatus can incorporate means to turn on the heater before the engine is started, for instance 1-2 seconds before the engine is started (being similar to the situation with a conventional diesel cylinder heater). Preferably, however, the apparatus is adapted to turn on the heater immediately after the engine has started, so that the heater can be electrically powered but not draw power from the engine's battery when it is needed to start the engine. In a preferred embodiment, the apparatus is in the exhaust system of a vehicle and the heater is powered by the vehicle's alternator and/or battery.

When the heater is on, its heat output can be controlled by supplying constant power to it. Alternatively, control can be exercised by maintaining its temperature constant, measured for instance optically or by thermocouple. Alternatively again, control can be exercised by varying the power supplied to the heater in relation to the temperature and/or flow rate of the gas up-stream of it.

Conventional control means and electrical circuitry can be employed to control the heater.

The present apparatus can incorporate additional means of heating the catalyst to reduce the time it takes to reach its effective reaction temperature, such as electrical resistive heating of a catalytic converter, besides the present heater, but this is not preferred.

It is especially advantageous to employ the present apparatus in the exhaust system of an engine mounted in a vehicle and to employ an electrically powered heater working off the vehicle's 8-28 volt supply, usually a nominal 12 or 24 volt supply, to avoid having to increase the vehicle's electrical power supply.

In use, the present apparatus combats air pollution from an engine exhaust system by passing the exhaust gas through the apparatus. The apparatus allows rapid heating of the heater, the exhaust gas and the catalyst. As is usual, supplemental air can be injected if needed up-stream of the catalyst to enable it to carry out its reactions; usually it is needed. The supplemental air is generally injected up-stream of the present heater and catalyst.

The invention is illustrated by the accompanying drawings, whose 8 Figures are described in the Examples.

The invention is illustrated by the following Examples.

## EXAMPLE 1

A conventional, commercial, $Pt/Rh/CeO_2/Al_2O_3$ vehicle exhaust catalyst on a cordierite cylindrical monolith of dimensions 4in (10.2cm) diameter and 6in (15.2cm) long (which catalyst unit is from Johnson Matthey PLC, England) was employed fitted in a canister. The catalyst unit has a Pt:Rh weight ratio of 5:1, and contains 40g per cubic foot (1.41g per litre) in total of Pt and Rh, 1200g per cubic foot (42.4g per litre) $CeO_2$ and 4320g per cubic foot (152.7g per litre) of $Al_2O_3$. The monolith cell density is 400 cells per square inch (62 cells per square cm). Two circular rhodium/platinum gauzes were fitted one in front of the other, 5mm apart and 5mm in front of the monolith in the canister. Thus, the distance between the end of 50% of the heated channels and the beginning of the catalyst is 5mm. The exposed area of each gauze was square and measured 8cm by 8cm. The gauzes were made of wire of diameter 0.076mm (which was thus the approximate length of each channel) consisting of 10% by weight rhodium and 90% by weight platinum. The gauzes were of square mesh and contained 1024 wires per $cm^2$ (ie, apertures per $cm^2$). Each gauze weighed 5g. The gauzes were contacted through brass plates to which 12V AC electrical power could be supplied. For the experiments described below, the power supplied to this heater was between 1.9 and 3.0kW. Thermocouples were fitted in the canister inlet, between the heater and the monolith front face and at the monolith outlet. The canister was fitted into tubing connected via a heat exchanger to the exhaust of a 1.6L Volkswagen Golf GTI engine.

Concentrations of unburnt hydrocarbons, carbon monoxide and nitrogen oxides were monitored at the inlet and outlet of the canister by standard means. It was established by changing the air-to-fuel ratio of the engine that the time delay between gaseous concentration change at the engine and detection of this change by analysers monitoring the canister outlet was of the order of 5 seconds.

A series of experiments was performed using an air-to-fuel ratio such that λ=0.995.

The exhaust gas was passed through the canister at a space velocity of 20,000/hr. Without power being supplied to the heater, the light-off temperature (defined as the temperature at which 50% of the inlet carbon monoxide is converted) of the catalyst was first measured, at the canister inlet thermocouple. The heat exchanger was then set so that the canister inlet temperature was 160°C below this light-off temperature. At this low temperature, negligible conversion of the pollutants in the exhaust gas occurred. Power was then supplied to the heater and the response of the pollutant detectors monitored. It was found that significant conversion of the inlet carbon monoxide was achieved 7 seconds after power was switched on, and light-off quickly followed. Thus, the heater reduces the temperature at which the exhaust gas results in light-off by at least 160°C. This is the effective reduction in light-off temperature.

The experiment was repeated at different space velocities and the corresponding reduction by the heater of the temperature at which the exhaust gas results in light-off was measured.

The results are shown in the following Table.

### TABLE 1

| Space Velocity, per hour | Effective Reduction in Light-off Temperature, °C |
|---|---|
| 20,000 | ≧160 |
| 30,000 | ≧160 |
| 40,000 | 120 |
| 50,000 | 80 |
| 80,000 | 50 |

It can be seen that the heater reduces markedly the temperature at which the exhaust gas results in light-off. Hence, in a real-life situation without the heat exchanger controlling the temperature of the exhaust gas, the heater would markedly reduce the time taken by the catalyst to reach its effective reaction temperature. It should be noted that under these conditions the heater is non-catalytic.

## EXAMPLE 2

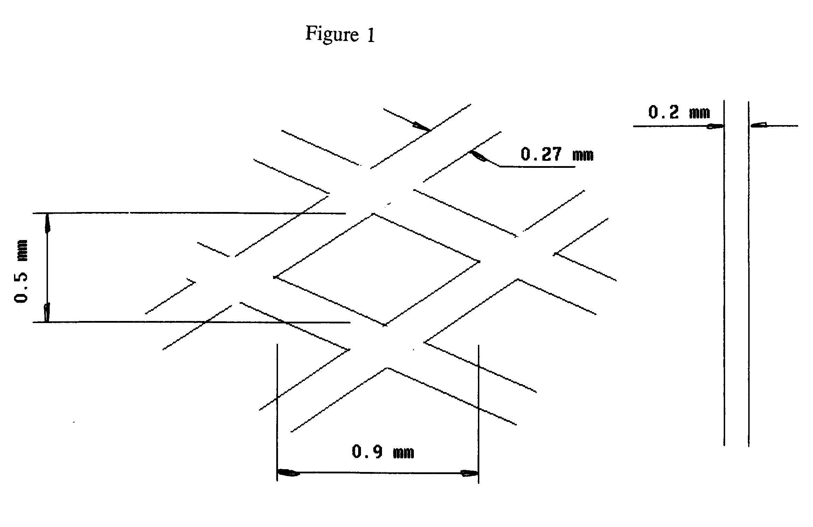

A catalyst unit as described in Example 1 was fitted in a canister. Four identical strips of expanded mesh made from 316 stainless steel were fitted in two pairs, one in front of the other, 6mm apart and 10mm in front of the monolith in the canister, such that the major axis of the meshes in one pair was aligned at right angles to the major axis of the meshes in the other pair. The exposed area of each gauze was rectangular and measured 10cm by 7.5cm. Each pair consisted of 2 of the strips of expanded mesh wholly overlying and touching each other, spot welded to each other so that their channels were aligned, and connected electrically in parallel. The pairs were connected electrically to each other in series. It can be seen that the distance between the end of 25% of the heated channels and the beginning of the catalyst was 10mm. The approximate mesh aperture and wire dimensions are shown in Figure 1. The thickness of the original sheet of metal before slotting and expansion to form the mesh is shown on the right of this Figure and was 0.2mm. Hence, in the present apparatus each channel is slightly less than 0.2mm in length. The meshes were connected through monel metal plates to which 12V AC electrical power could be supplied. Thermocouples were fitted as in Example 1, and the canister was fitted into tubing connected via a heat exchanger to the exhaust of a 1.6L Volkswagen Golf GTI engine. Experiments were conducted as in Example 1, and gave exactly the same results as recorded in the Table therein. In addition, for the 30,000/hr, 40,000/hr and 50,000/hr experiments, the mesh outlet temperature (ie the temperature between the heater and the monolith front face) was measured and the power supplied was monitored. From a simple energy balance based on these space velocities, the specific heat capacity of the exhaust gas and the difference between inlet and mesh outlet temperature the power required to heat the exhaust gas to mesh outlet temperature was calculated. These data and the actual power employed are shown in the following Table.

### TABLE 2

| Space Velocity (per hour) | Inlet Temperature (°C) | Mesh Outlet Temperature (°C) | Actual Power (kW) | Calculated Power (kW) |
|---|---|---|---|---|
| 30,000 | 100 | 325 | 3 | 2.9 |
| 40,000 | 150 | 300 | 2.9 | 2.6 |
| 50,000 | 210 | 323 | 2.8 | 2.4 |

From the calculated and actual figures, it can be seen that the heater is greater than 86% efficient. Further, it is concluded that because the calculated power shown does not exceed the actual power supplied, the heater itself is not catalytic; if it were, the calculated power shown would be greater than the actual power supplied.

## EXAMPLE 3

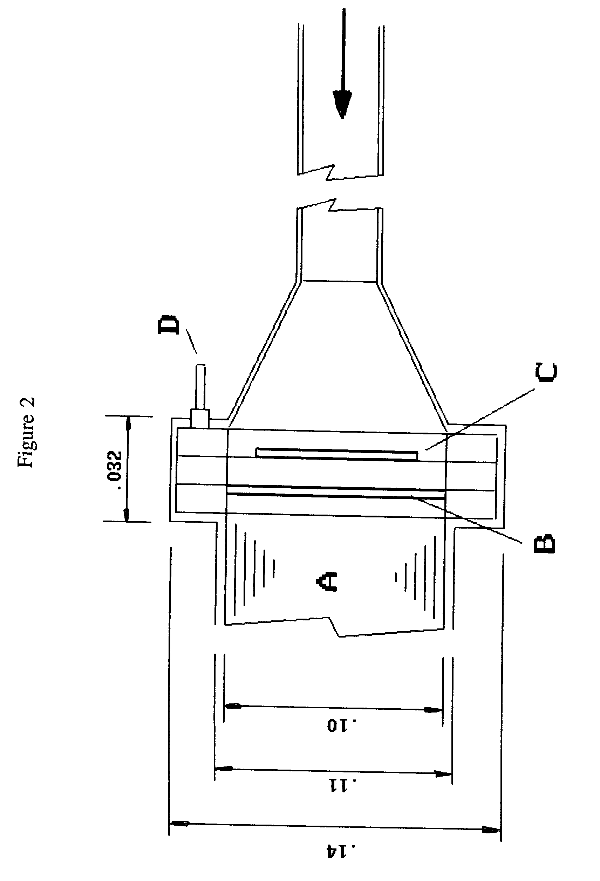

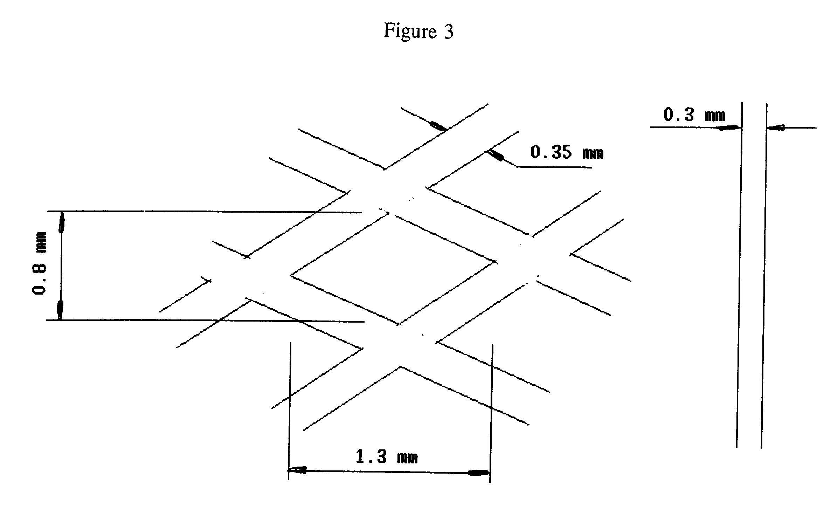

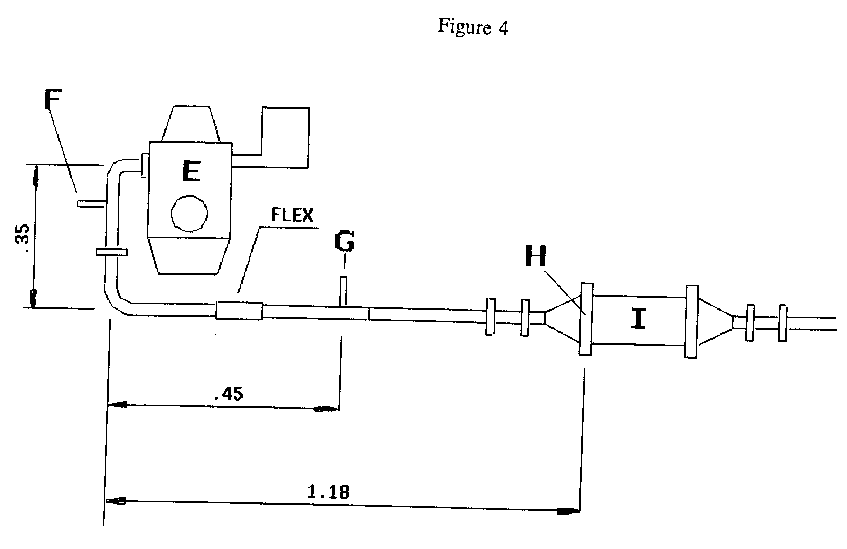

A further series of experiments was performed with a mesh heater in combination with the standard Pt/Rh/CeO$_2$/Al$_2$O$_3$ catalyst unit described in Example 1. The mesh heater was fitted into the canister as is shown in Figure 2, the arrow in which shows the direction of gas flow. The catalytic converter monolith is shown lettered A, two pairs of strips of expanded mesh which formed the heater are shown lettered B and C and an electrical connection pin is shown lettered D. All dimensions are in metres. The strips of expanded mesh were of the same size and arranged and connected in the same way as those of Example 2. The strips were made of inconel 600 expanded mesh, the typical aperture dimensions and initial sheet metal thickness of which are shown in Figure 3. The converter canister was fitted into the exhaust pipe of a Mitsubishi Galant automobile as is shown in Figure 4. The engine is shown lettered E and an oxygen sensor is shown in position F. Secondary air was added at position G and the heater and converter are shown in respective positions H and I. Again all dimensions are in metres.

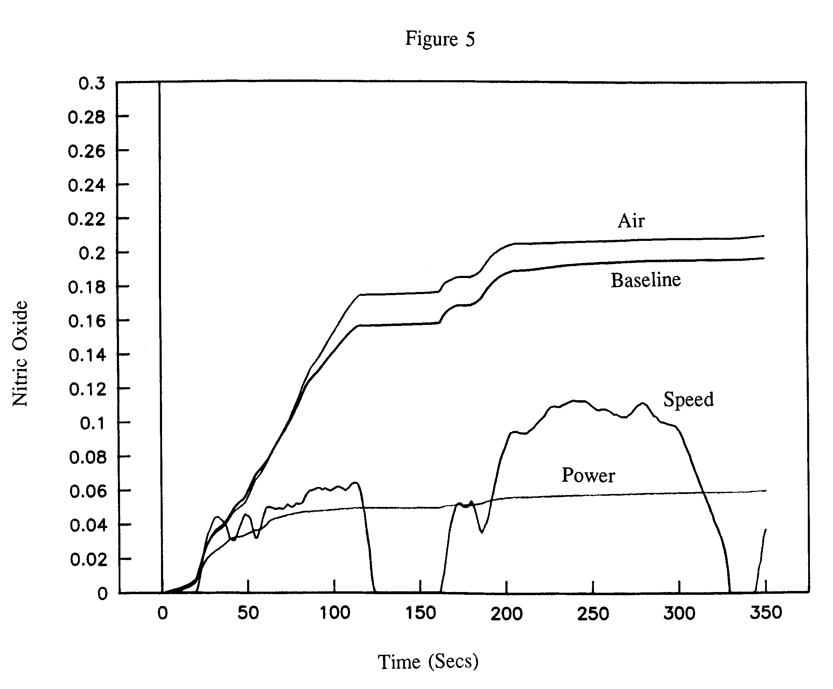

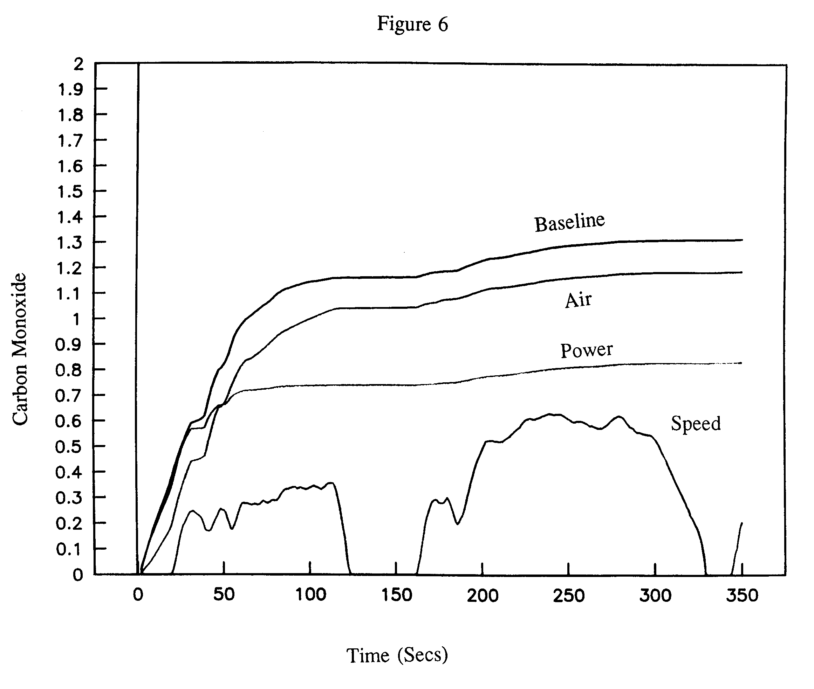

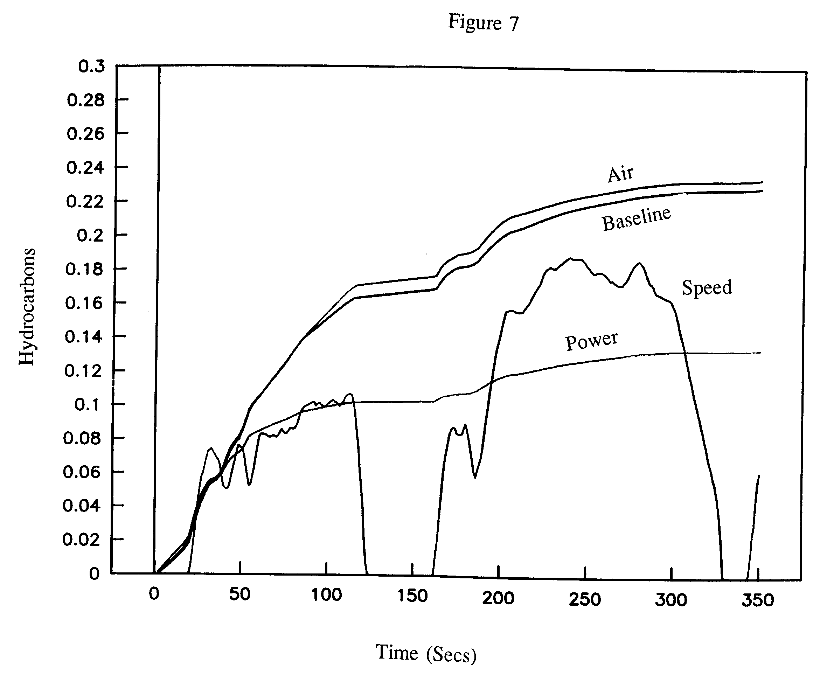

The automobile was then mounted on a rolling road and the United States Federal Test Procedure was carried out on it. This test was performed variously without additional air or power supplied to the heater (denoted as "Baseline" in Figures 5-8), with secondary air but no power (denoted as "Air") and with air and power supplied (denoted as "Power"). Figures 5-8 also show a trace of the vehicle speed (denoted as "Speed"). Secondary air was added at the fixed rate of 5 standard cubic feet per minute (142 standard litres per minute). Power was supplied at 110W for the first 2 seconds, 2.3kW for the next 23 seconds and then 2.6kW for the remaining 95 seconds. Figure 5 shows the reduction in nitric oxides during the first 350 seconds of the test procedure. The ordinate labelled "Nitric Oxide" represents the cumulative weighted tailpipe (post catalyst) nitric oxide emissions in grammes per mile (grammes per 1.61 kilometres). A 70% reduction in the weighted emissions over the first part of the test (called Bag 1) was obtained. In Figure 6 the reduction in cumulative weighted carbon monoxide emissions (on the ordinate labelled "Carbon Monoxide" and in units as before) is shown, again over the first 350 seconds of the test. In this case, a 37% reduction in weighted emissions over the first part of the test is obtained. A reduction of 43% in hydrocarbon weighted emissions was obtained. The data are shown in Figure 7, where the label "Hydrocarbons" on the ordinate axis represents the cumulative weighted hydrocarbon emissions (units as before).

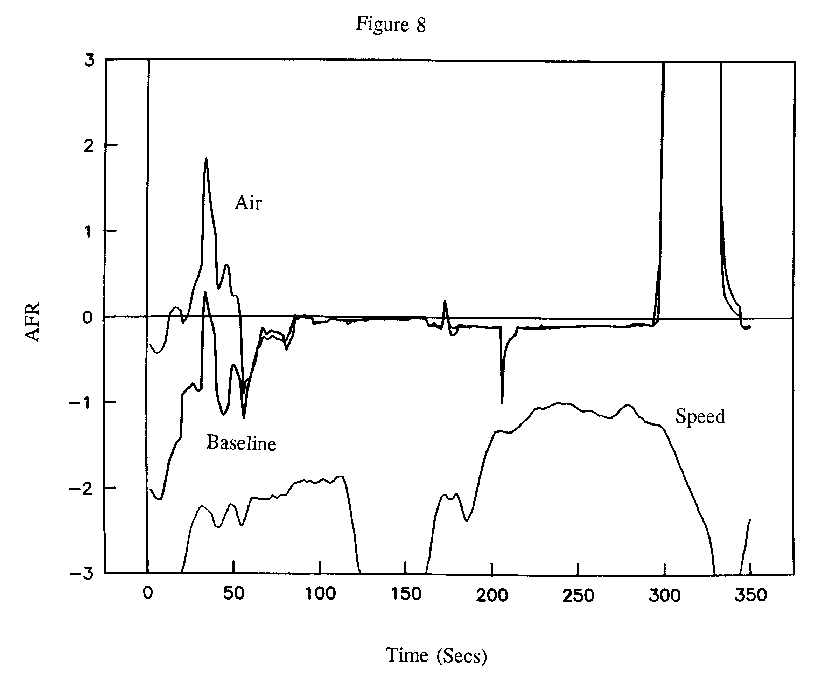

Figure 8 shows the exhaust gas air:fuel ratio trace for the test conditions with ("Air") and without ("Baseline") the addition of secondary air. The ordinate axis label "AFR" represents the ratio of air to fuel by weight. Position 0 (zero) denotes a ratio of 14.56 (defined as stoichiometric) whilst, for instance, position -1 denotes a ratio of 13.56, a condition of excess fuel termed rich, and position 1 denotes a ratio of 15.56, a condition of excess air termed lean. It can be seen that the addition of the quantity of secondary air does not result in a continuously lean/stoichiometric condition throughout the first 70 seconds of the test (the time for which secondary air was added). It is concluded that variable addition of secondary air will result in even lower emission levels, particularly of hydrocarbons for whose control a continuously lean condition is advantageous.

## Claims

1. Apparatus for use in an engine exhaust system, which apparatus contains
   (A) a catalyst for the treatment of the exhaust gas in order to combat air pollution, and
   (B) a non-catalytic heater up-stream of the catalyst, to reduce the time it takes the catalyst to reach its effective reaction temperature, the heater having at least 15 heated channels per square cm, as measured at right angles to the gas flow through them, the heated channels being less than 1.0cm in length, so that in operation the gas passes through the channels, and is thereby heated, before it reaches the catalyst, the heater being such that the heated gas leaving the channels has at least to some extent turbulent flow.

2. Apparatus according to claim 1 for use in the exhaust system of a petrol engine.

3. Apparatus according to claim 1 or 2 for use in a vehicle.

4. Apparatus according to any one of claims 1-3 wherein the catalyst comprises at least one of platinum and palladium.

5. Apparatus according to claim 4 wherein the catalyst comprises platinum and rhodium.

6. Apparatus according to any one of the preceding claims wherein the catalyst is supported on a honeycomb monolith.

7. Apparatus according to any one of the preceding claims whose heated channels are resistance heated by electrical power.

8. Apparatus according to any one of the preceding claims wherein the distance between the end of at least some of the heated channels and the beginning of the catalyst is 0-5cm.

9. Apparatus according to any one of the preceding claims wherein the heater has 30-5000 of the heated channels per square cm.

10. Apparatus according to any one of the preceding claims wherein the channels have a hydraulic diameter of less than 0.3cm.

11. Apparatus according to any one of the preceding claims whose channels are 0.005-0.2cm in length.

12. Apparatus according to any one of the preceding claims wherein the area of the cross-section occupied by the channels at right angles to the flow of gas through them is 1-6500 square cm.

13. Apparatus according to any one of the preceding claims wherein the area of the cross-section occupied by the channels at right angles to the flow of gas through them is 1-260,000,000 times the square of the length of the channels.

14. Apparatus according to any one of the preceding claims wherein the heater is such that it satisfies the relationship

$$\Delta P \; \alpha \; V^n$$

in which $\Delta P$ is the pressure drop across the channels, V is the velocity of the gas entering them and n is from 1.2 to 2.

15. Apparatus according to any one of the preceding claims whose channels are provided by one or more heated gauzes.

16. Apparatus according to any one of claims 1-14 whose channels are provided by one or more heated coils.

17. Apparatus according to any one of claims 1-14 whose channels are provided by one or more heated areas of expanded mesh.

18. Apparatus according to any one of the preceding claims contained in a canister for mounting in the exhaust system.

19. Apparatus according to any one of the preceding claims present in the exhaust system.

20. A method of combating air pollution from an engine exhaust system, which method comprises passing the exhaust gas through apparatus claimed in any one of the preceding claims.

Figure 1

0.2 mm

0.27 mm

0.9 mm

0.5 mm

Figure 2

Figure 3

0.3 mm

0.35 mm

1.3 mm

0.8 mm

Figure 4

Figure 5

Figure 6

## Figure 7

Figure 8

European Patent
Office

**EUROPEAN SEARCH REPORT**

Application Number

EP    93 30 5128

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | US-A-5 051 241 (PFEFFERLE)<br><br>* the whole document * | 1-3,<br>6-15,<br>18-20 | F01N3/20<br>F01N3/28 |
| Y | WO-A-9 208 883 (EMITEC GESELLSCHAFT FÜR EMISSIONSTECHNOLOGIE MBH)<br><br>* page 4, line 1 - line 8 * | 1-3,<br>6-15,<br>18-20 | |
| A | DE-B-1 264 671 (DEUTSCHE GOLD- UND SILBER-SCHEIDEANSTALT)<br><br>* column 1, line 1 - column 6, line 25; figures 4,5 * | 1-7,<br>9-15,19,<br>20 | |
| A | FR-A-1 211 081 (KAGAN)<br><br>* the whole document * | 1-3,7,<br>9-15,19,<br>20 | |
| A | GB-A-433 547 (KENNETH SCOTT ADIE) | | TECHNICAL FIELDS SEARCHED (Int. Cl.5) |
| A | US-A-2 715 671 (HARRISON) | | F01N<br>H05B |
| A | FR-A-2 304 240 (ATELIERS DE CONSTRUCTIONS ÉLECTRIQUES DE CHARLEROI) | | |
| A | FR-A-1 567 557 (BALZERS PATENT-UND BETEILIGUNGS AKTIENGESELLSCHAFT) | | |

The present search report has been drawn up for all claims

| Place of search | Date of completion of the search | Examiner |
|---|---|---|
| THE HAGUE | 29 SEPTEMBER 1993 | FRIDEN C.M. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)